# EUROPÄISCHE PATENTSCHRIFT

(11) **EP 1 295 099 B1**
(45) Veröffentlichungstag und Bekanntmachung des Hinweises auf die Patenterteilung: **14.09.2011**
(21) Anmeldenummer: 01940559.6
(22) Anmeldetag: 09.06.2001
(51) Int. Cl.: G01M 17/007, B03B 9/06, B07B 13/00, B09B 5/00, B30B 15/26, G05B 19/418

(54) **VERFAHREN ZUR PRÜFUNG EINES PRODUKTES IM HINBLICK AUF QUALITÄTSMÄNGEL**
METHOD FOR TESTING A PRODUCT FOR QUALITY DEFECTS
PROCEDE DE CONTROLE QUALITATIF D'UN PRODUIT

(30) Priorität: 13.06.2000 DE 10028382
(43) Veröffentlichungstag der Anmeldung: 26.03.2003
(73) Patentinhaber: Volkswagen Aktiengesellschaft, 38436 Wolfsburg (DE); metaio GmbH, 80797 München (DE)
(72) Erfinder: ALT, Thomas, 38106 Braunschweig (DE); SCHREIBER, Werner, 38527 Meine (DE)
(74) Vertreter: Klunker . Schmitt-Nilson . Hirsch
(86) Internationale Anmeldenummer: PCT/EP2001/006551
(87) Internationale Veröffentlichungsnummer: WO 2001/096829

(56) Entgegenhaltungen:
- EP-A- 0 949 513
- WO-A-00/52536
- WO-A-00/58799
- DAUDE R ET AL: "HEAD-MOUNTED DISPLAY ALS FACHARBEITERORIENTIERTE UNTERSTUETZUNGSKOMPONENTE AN CNC-WERKZEUGMASCHINEN" WERKSTATTSTECHNIK, SPRINGER VERLAG. BERLIN, DE, Bd. 86, Nr. 5, 1. Mai 1996 (1996-05-01), Seiten 248-252, XP000585192 ISSN: 0340-4544

## Beschreibung

Die Erfindung betrifft ein Verfahren zur Prüfung eines Produktes, insbesondere eines Kraftfahrzeugs oder einer Kfz Komponente im Hinblick auf Qualitätsmängel.

Ebenfalls grundsätzlich bekannt sind sogenannte Augmented Reality AR-Systeme. Der Begriff Augmented Reality ist als Überlagerung einer realen Umgebung mit einer rechnergenerierten Umgebung, d.h. einer virtuellen Welt, definiert. AR ist somit eine Art der Mensch-Technik Interaktion, die dem Anwender Informationen in sein Sichtfeld einblendet und so seine Wahrnehmung erweitert. Dies geschieht kontextabhängig, d.h. angepaßt an eine jeweilige Situation in welcher sich der Anwender gerade befindet. Als Informationen können grundsätzlich jegliche Arten von Daten, insbesondere Bild- oder Textdaten, eingeblendet werden. Der Anwender hat durch die Überlagerung von virtueller und realer Umgebung die Möglichkeit, Soll-Ist Abgleiche einfach durchzuführen. Weiterhin kann ein AR-System zur einfachen Visualisierung komplexer Informationen jeglicher Art auch ohne Überlagerung mit dem realen Sichtfeld verwendet werden.

Eine Anwendung eines AR-Systems ist z.B. aus dem Bereich der Flugzeugmontage bekannt. Dabei werden in das Sichtfeld eines Monteurs Informationen, z.B. in Form von Montageanleitungen eingeblendet, die für den Monteur bei einem aktuell durchgeführten Arbeitsschritt hilfreich sind. In diesem Fall ersetzt das AR-System das herkömmliche Montagehandbuch. Bei der Anwendung trägt der Monteuer üblicherweise eine halbdurchlässige Datenbrille, die einerseits den Blick des Monteuers auf ein gerade bearbeitetes reales Objekt freigibt, aber daneben auch den Blick auf die eingeblendeten Informationen erlaubt; siehe: Thomas P. Caudell, David W. Mizell: "Augmented Reality: An Application of Heads-Up Display Technology to Manual Manufacturing Process" in Proceedings of 1992 IEE Hawaii International Conference on Systems Siences, IEEE Press, January 1992.

Die EP 0 949 513 A2 offenbart ein Augmented-Reality-System mit einem Trackersystem zur Bestimmung der Relativposition zwischen einem Sensor zur Bestimmung eines Musters von Bezugspunkten auf einer Objektoberfläche und der Objektoberfläche, wobei das Augmented-Reality-System einen Prozessor umfasst, der mit dem Sensor verbunden ist..

Es ist Aufgabe der Erfindung, die Qualitätskontrolle bzw. -sicherung bei der Herstellung von Produkten, insbesondere bei der Herstellung von Kraftfahrzeugen oder Kraftfahrzeugkomponenten zu verbessern bzw. die Kosten für die Qualitätskontrolle bzw. -sicherung und damit für die Produkte selbst zu senken.

Diese Aufgabe wird gemäß dem in Patentanspruch 1 beanspruchten Verfahren gelöst.

Die Durchführung der Prüfung durch das erfindungsgemäß vorgesehene AR-System wird wesentlich vereinfacht, weil das AR-System z.B. auf Anweisung des Prüfers, automatisch durch den Prüfer festgestellte Qualitätsmängel, z.B. mit Hilfe einer Kamera, erfaßt und zur Speicherung an einen Datenspeicher weiterleitet. Ein mühseliges manuelles Protokollieren des Qualitätsmangels durch den Prüfer ist damit entbehrlich. Die Durchführung der Prüfung wird auch insofern erleichtert, als daß dem Prüfer z.B. über eine Datenbrille des AR-Systems Hinweise zur Durchführung der Prüfung gegeben werden können.

Das beanspruchte Verfahren ist primär für einen Einsatz bei der Qualitätskontrolle in der Automobilproduktion, d.h. der Kfz-Fertigung, vorgesehen, aber keineswegs darauf beschränkt. So kann es auch bei der regelmäßigen technischen Überwachung von insbesondere zugelassenen Fahrzeugen, lange nach Abschluß der Fertigung verwendet werden. Sein Einsatz ist auch denkbar bei einer Begutachtung von Unfallschäden von Kfz.

Weiterhin ist es vorteilhaft für einen Nacharbeiter, der bei einer durchgeführten Prüfung festgestellte Mängel bei einem Produkt nacharbeiten, d.h. beheben soll, wenn ihm der erkannte Mangel per AR-System direkt an dem entsprechenden Produkt, z.B. mit Hilfe der Datenbrille, angezeigt wird. Eine zeitaufwendige Suche des Qualitätsmangels auf dem zu reparierenden Objekt ist dann entbehrlich.

Weiterhin ist es von Vorteil, wenn dem Nachbearbeiter neben einer Fehlerindikation auch eine Anleitung zur Behebung des Fehlers von dem AR-System, z.B. über die Datenbrille zugeführt wird.

Durch die beschriebene Weiterleitung von Qualitätsmangelinformation an den Werker oder an den Nachbearbeiter wird der Informationsfluß zwischen allen an der Fertigung beteiligten Personen und damit letzten Endes auch die Qualität des fertigen Produktes gefördert.

Die oben genannte Aufgabe der Erfindung wird weiterhin gemäß dem in Patentanspruch 10 beanspruchten System dadurch gelöst, daß die Ausgabevorrichtung als Augmented-Reality AR-System ausgebildet ist. Die Vorteile des Systems entsprechen im wesentlichen den oben für das Verfahren beschriebenen Vorteilen.

Der in der Beschreibung verwendete Begriff des Anwenders des AR-Systems ist weit aufzufassen. Er umfaßt bei Anwendung des Systems in der Produkt-Fertigung insbesondere den Werker in der Fertigung, den Prüfer und/oder den Nachbearbeiter.

Als Vorteil des AR-Systems in der Qualitätsüberwachung ist insbesondere zu erwähnen, daß es über die Datenbrille eine ergonomisch günstige Bereitstellung der Information ermöglicht. Darüber hinaus gewährleistet es eine an die jeweilige Arbeitssituation eines Anwenders angepaßte, d.h. bedarfsorientierte Bereitstellung von Information. Eine für den Anwender irritierende Informationsflut wird durch das AR-System vermieden. Diese situationsgereichte Bereitstellung wird durch ein dem AR-System zugeordnetes Tracking-System realisert.

Alternativ dazu kann das AR-System allerdings auch Informationen unabhängig von einer jeweiligen Arbeitssituation bereitstellen.

Weitere vorteilhafte Ausgestaltungen des Verfahrens oder des Systems sind Gegenstand der Unteransprüche.

Der Beschreibung sind 2 Figuren beigefügt, wobei
- Fig. 1:: eine Übersicht über die Anwendung des erfindungsgemäßen Verfahrens und Systems in der Kfz-Fertigung; und .
- Fig. 2 :: ein Beispiel für die Einblendung von Informationen in das Sichtfeld eines Anwenders bei Tragen einer Datenbrille;
zeigt.

Es folgt eine detaillierte Beschreibung von Ausführungsformen der Erfindung am Beispiel der Kfz-Fertigung.

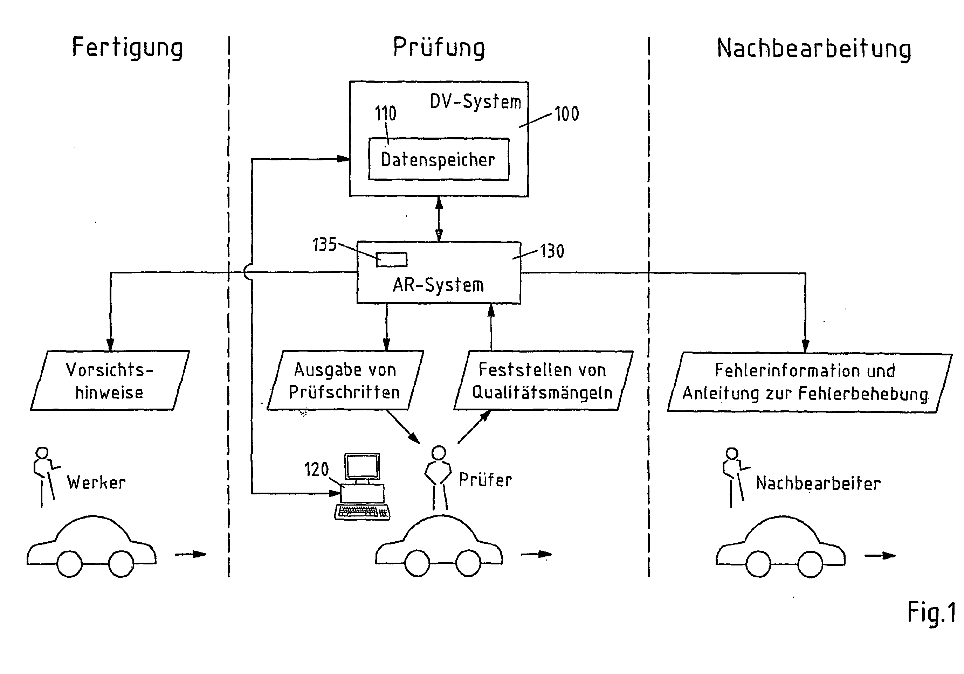

Fig. 1 zeigt einen Überblick über eine bevorzugte Anwendung des erfindungsgemäßen Verfahrens und des erfindungsgemäßen Systems im Bereich der Qualitätskontrolle bei der Automobilproduktion. Wie in Fig. 1 dargestellt sind bei der Automobilproduktion beispielsweise 3 Bereiche zu unterscheiden, nämlich die eigentliche Kraffahrzeug- oder Komponentenfertigung, die Prüfung und die Nachbearbeitung zur Behebung von bei der Prüfung erkannten Fehlern. Diese Bereiche können allerdings auch ineinander verschachtelt sein. So besteht eine übliche Methode zur Verkürzung des Informationsflusses bei aufgetretenen Qualitätsmängeln in der Bildung von sogenannten Qualitätsregelkreisen. Dabei werden mehrere Fertigungsprozesse zu organisatorischen Einheiten zusammengeschlossen. Eine Qualitätskontrolle einer Komponente findet dann nicht nur am Ende der gesamten Produktion, sondern spätestens auch nach durchlaufen einer Einheit statt. Die Bildung der Qualitätsregelkreise dient auch zur Verkürzung des Vorlaufes, d.h. zu einer Verringerung der Anzahl von Kraftfahrzeugen oder Komponenten, die noch mit einem Qualitätsmangel gefertigt werden, wenn der Qualitätsmangel zwar bereits festgestellt, aber noch keine Rück-Auswirkung auf die Fertigung genommen hat.

Unabhängig davon, an welcher Stelle im Fertigungsprozess oder danach eine Prüfung von Kfz oder Kfz-Komponenten durchgeführt wird, geschieht die Prüfung immer mit Hilfe eines Systems 100 zur elektronischen Verarbeitung von Daten, welche bei der Prüfung anfallen. Dazu weist das System 100 einen Datenspeicher 110 zur Speicherung der Daten und Ein- und Ausgabevorrichtungen auf. Die Ein- und Ausgabevorrichtungen können z.B. als Terminal 120 mit Tastatur und Bildschirm ausgebildet sein.

Erfindungsgemäß ist zumindest eine der Ein- oder Ausgabevorrichtungen des Systems 100 als Augmented Reality System 130 ausgebildet. Die Dateneingabe in das System 100 über das AR-System 130 kann z.B. per Spracheingabe über ein Mikrofon oder mit Hilfe einer Kamera erfolgen; Mikrofon und Kamera sind bevorzugt am Kopf des Anwenders, insbesondere an einer sogenannten Datenbrille 132 befestigt. Die Ausgabe von Daten an den Anwender erfolgt bei dem AR-System 130 z.B. über einen Kopfhörer 136, insbesondere aber über die Datenbrille 132.

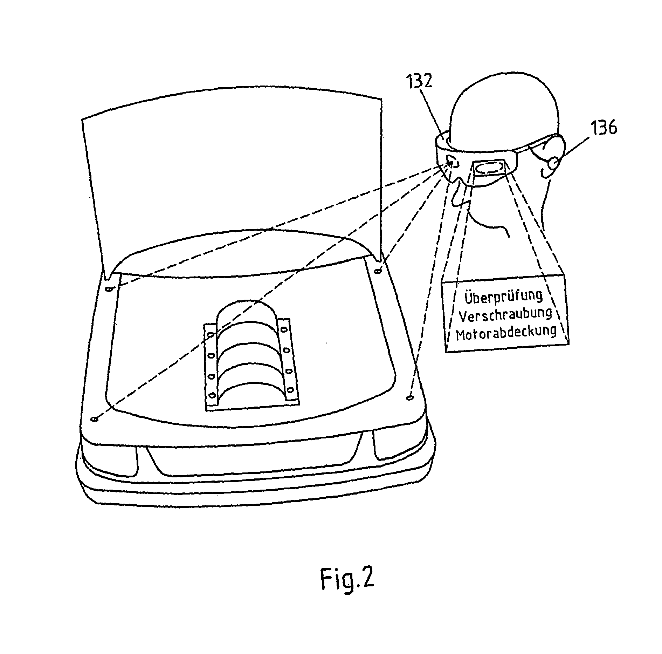

Fig. 2 zeigt eine Anwendung für eine solche Datenbrille 132 mit deren Hilfe dem Anwender Zusatzinformationen in sein Sichtfeld einblendet werden können, wie dies oben, bei der Beschreibung des Standes der Technik, bereits erwähnt wurde. Vorteilhafter Weise ist die Verbindung der Datenbrille 132 zu dem AR-System drahtlos, z.B. als Funkverbindung, ausgebildet, so daß der Anwender mobil, d.h. bezüglich seines Standortes unabhängig von dem Standort des AR-Systems ist.

Aus Fig. 1 ist zu erkennen, daß mit Hilfe des AR-Systems für den Prüfer die Durchführung der Prüfung insofern erleichtert werden kann, als daß ihm die jeweils auszuführenden Prüfschritte zumindest teilweise über die Datenbrille visualisiert werden. Weiterhin ist das AR-System 130 in der Lage, einen vom Prüfer festgestellten Qualitätsmangel aufzunehmen und als Datum an das System 100 zwecks Speicherung in dem Datenspeicher 110 weiterzuleiten. Die Aufnahme des Mangels kann z.B. durch eine Kamera oder durch Spracheingabe erfolgen. Wenn das AR-System über ein Tracking-System 135 verfügt, so ist es mit dessen Hilfe in der Lage, einen Fingerzeig oder eine aktuelle Blickrichtung des Prüfers als Hinweis auf die Position eines festgestellten Qualitätsmangel zu interpretieren, um daraufhin automatisch eine Aufnahme des Qualitätsmangels in das System 100 durchzuführen. Die Anwendung des AR-Systems 130 ist allerdings auch im Rahmen der Kfz-Produktion nicht alleine auf eine Unterstützung bei der Durchführung der Qualitätsprüfung beschränkt.

So kann das AR-System 130 auch dazu verwendet werden, einem Werker in der eigentlichen Kfz- oder Kfz-Komponentenfertigung, d.h. z.B. am Band, relevante Informationen zur Verfügung zu stellen. Besonders vorteilhaft ist es, dem Werker über das AR-System, d.h. über die Datenbrille, z.B. aus gefundenen Qualitätsmängeln abgeleitete Vorsichtshinweise zu visualisieren. Ein solcher Vorsichtshinweis könnte z.B. wie folgt lauten: "Bitte seien Sie besonders vorsichtig beim Einbau des Tachometers in das Armaturenbrett; bei zahlreichen zuvor produzierten Fahrzeugen sind bei der Qualitätskontrolle Kratzer im Armaturenbrett im Bereich des Tachometers festgestellt worden". Es sei betont, daß es sich bei derartigen Qualitätsmängel-bedingten Vorsichtshinweisen, nicht notwendigerweise um Montagehinweise handelt. Montagehinweise würden im Unterschied zu den Vorsichtshinweisen, eine konkrete Anleitung z.B. zum Einbau des Tachometers geben. Durch die beschriebene Auswertung und Aufbereitung von Qualitätsmängeln in z.B. der Form von Vorsichtshinweisen, wird einem zukünftigen wiederholten Auftreten gleicher oder ähnlicher Qualitätsmängel vorgebeugt.

Weiterhin empfiehlt sich eine Anwendung des AR-Systems in der Nachbereitung, also dort, wo bei der Prüfung festgestellte Qualitätsmängel an einem spezifischen Kfz oder an einer spezifischen Kfz-Komponente beseitigt werden. Hier ist es vorteilhaft, wenn dem Nachbearbeiter nicht nur Informationen über die Art und die Position des Fehlers, sondern auch eine Anleitung zu dessen Beseitigung, z.B. über die Datenbrille 132 visualisiert werden.

Das AR-System 130 stellt allen Anwendern, sei es dem Prüfer, dem Werker oder dem Nachbearbeiter, immer nur diejenigen Informationen bereit, welche sie in ihrer jeweiligen Arbeitssituation, z.B. zur Prüfung oder Bearbeitung einer bestimmten Kfz-Komponente benötigen. Idealerweise wird die jeweilige Arbeitssituation oder die jeweilige Komponente sogar automatisch von dem AR-System, insbesondere von dem Tracking-System erkannt. Diese bedarfsgerechte Bereitstellung von Information bietet den Vorteil, daß die Information schnell zur Verfügung steht und nicht erst zeitaufwendig von dem Anwender z.B. in einem Manual gesucht werden muß.

### BEZUGSZEICHENLISTE

- 100: System
- 110: Datenspeicher
- 120: Ausgabevorrichtung
- 130: Augmented Reality System (AR-System)
- 132: Datenbrille
- 135: Tracking-System

## Patentansprüche

1. Verfahren zur Prüfung eines Kraftfahrzeugs oder einer Kfz-Komponente im Hinblick auf Qualitätsmängel, **dadurch gekennzeichnet, dass** ein Prüfer bei der Durchführung einer Prüfung im Hinblick auf Qualitätsmängel eines Kraftfahrzeugs oder einer Kfz-Komponente durch ein Augmented-Reality AR-System (130) unterstützt wird, welches prüfungsrelevante Daten aufnimmt und/oder an den Prüfer ausgibt, wobei die Prüfung im Rahmen der Fertigung des Kraftfahrzeugs oder der Kfz-Komponente zum Feststellen von Qualitätsmängeln bei dem Kraftfahrzeug oder der Kfz-Komponente in zumindest einem vorbestimmten Fertigungszustand erfolgt, wobei einem Werker bei der Durchführung einzelner, der Prüfung vorgelagerter Fertigungsschritte zur Fertigung weiterer Kraftfahrzeuge oder Kfz-Komponenten über das AR-System (130) ein auf zumindest einem der festgestellten Qualitätsmängel basierender Vorsichtshinweis zugeführt wird, oder wobei einem Nachbearbeiter bei der Durchführung einer der Prüfung nachgeschalteten Nachbearbeitung eines Mangel behafteten Kraftfahrzeugs oder einer Mangel behafteten Kfz-Komponente eine auf den jeweils festgestellten Qualitätsmängeln basierende Fehlerinformation über das AR-System (130) zugeführt wird.

2. Verfahren nach Anspruch 1,
**dadurch gekennzeichnet, dass** bei Prüfung festgestellte Qualitätsmängel als prüfungsrelevante Daten von dem Prüfer mit Hilfe des AR-Systems (130) aufgenommen und in einem Datenspeicher (110) gespeichert werden.

3. Verfahren nach Anspruch 1 oder 2,
**dadurch gekennzeichnet, dass** dem Nachbearbeiter über das AR-System (130) eine Anleitung zur Behebung eines durch die Fehlerinformation repräsentierten Qualitätsmangels zugeführt wird.

4. Verfahren nach einem der Ansprüche 1 bis 3,
**dadurch gekennzeichnet, dass** dem Prüfer bei der Durchführung der Prüfung jeweils vorgeschriebene Prüfschritte als prüfungsrelevante Daten von dem AR-System (130) zugeführt werden.

5. Verfahren nach einem der Ansprüche 1 bis 4,
**dadurch gekennzeichnet, dass** die Zuführung der Daten an den Anwender in Form einer Visualisierung oder per Sprachausgabe erfolgt.

6. Verfahren nach einem der Ansprüche 1 bis 5,
**dadurch gekennzeichnet, dass** die Zuführung der Daten für den Prüfer, den Werker oder den Nachbearbeiter angepaßt an dessen jeweilige Arbeitssituation erfolgt.

## Claims

1. Method for testing a motor vehicle or a motor vehicle component for quality deficiencies, **characterized in that** a tester is assisted in carrying out a test for quality deficiencies on a motor vehicle or a motor vehicle component by means of an augmented reality AR system (130) which captures test-related data and/or outputs the data to the tester, wherein the test is carried out within the scope of the fabrication of the motor vehicle or of the motor vehicle component in order to detect quality deficiencies in the motor vehicle or the motor vehicle component in at least one predetermined fabrication state, wherein a caution message based on at least one of the detected quality deficiencies is supplied to a worker during the execution of individual fabrication steps, occurring before the testing, for fabricating further motor vehicles or motor vehicle components via the AR system (130), or wherein fault information based on the respectively detected quality deficiencies is fed via the AR system (130) to a post-processing worker during the execution of post-processing, occurring after the testing, of a motor vehicle which is with a defect or of a motor vehicle component with a defect.

2. Method according to Claim 1,
**characterized in that** quality deficiencies which are detected during testing are recorded as test-related data by the tester using the AR system (130) and are stored in a data memory (110).

3. Method according to Claim 1 or 2,
**characterized in that** an instruction relating to the elimination of a quality defect represented by the fault information is fed to the post-processing worker via the AR system (130).

4. Method according to one of Claims 1 to 3, **characterized in that** respectively prescribed test steps are fed as test-related data by the AR system (130) to the tester during the execution of the test.

5. Method according to one of Claims 1 to 4, **characterized in that** the data are fed to the user in the form of a display or by voice output.

6. Method according to one of Claims 1 to 5, **characterized in that** for the tester, the worker or the post-processing worker, data are supplied in a way which is adapted to the respective working situation of said person.

## Revendications

1. Procédé pour contrôler un véhicule automobile ou un composant de véhicule automobile en vue d'y déceler un éventuel défaut de qualité, **caractérisé en ce qu'**un contrôleur, lors de l'exécution d'un contrôle en vue de déceler un éventuel défaut de qualité d'un véhicule automobile ou d'un composant de véhicule automobile, est assisté par un système AR de réalité augmentée (130) qui enregistre des données en rapport avec le contrôle et/ou les délivre au contrôleur, le contrôle s'effectuant dans le cadre de la fabrication du véhicule automobile ou du composant de véhicule automobile dans au moins un état de fabrication prédéterminé afin de déterminer des défauts de qualité au niveau du véhicule automobile ou du composant de véhicule automobile, une consigne de prudence basée sur au moins l'un des défauts de qualité constatés étant acheminée à un ouvrier par le biais du système AR (130) lors de l'exécution des étapes de fabrication individuelles qui précèdent le contrôle pour la fabrication de véhicules automobiles ou de composants de véhicule automobile supplémentaires, ou une information de défaut basée sur les défauts de qualité respectivement constatés étant acheminée à un opérateur de reprise par le biais du système AR (130) lors de l'exécution d'une reprise qui suit le contrôle sur un véhicule automobile présentant un défaut ou un composant de véhicule automobile présentant un défaut.

2. Procédé selon la revendication 1, **caractérisé en ce que** lors du contrôle, les défauts de qualité constatés sont relevés par le contrôleur à l'aide du système AR (130) sous la forme de données en rapport avec le contrôle et enregistrés dans une mémoire de données (110).

3. Procédé selon la revendication 1 ou 2, **caractérisé en ce qu'**une instruction pour éliminer un défaut de qualité représenté par l'information de défaut est acheminée à l'opérateur de reprise par le biais du système AR (130).

4. Procédé selon l'une des revendications 1 à 3, **caractérisé en ce que** des étapes de contrôle prédéfinies sont acheminées à chaque fois au contrôleur lors de l'exécution du contrôle par le biais du système AR (130) sous la forme de données en rapport avec le contrôle.

5. Procédé selon l'une des revendications 1 à 4, **caractérisé en ce que** l'acheminement des données aux utilisateurs s'effectue sous la forme d'une visualisation ou d'une diffusion vocale.

6. Procédé selon l'une des revendications 1 à 5, **caractérisé en ce que** l'acheminement des données pour le contrôleur, l'ouvrier ou l'opérateur de reprise s'effectue d'une manière adaptée à leurs situations de travail respectives.
